# EUROPÄISCHE PATENTSCHRIFT

(11) **EP 1 495 892 B1**
(45) Veröffentlichungstag und Bekanntmachung des Hinweises auf die Patenterteilung: **17.12.2008**
(21) Anmeldenummer: 04015809.9
(22) Anmeldetag: 06.07.2004
(51) Int. Cl.: B60J 7/047

(54) **Öffnungsfähiges Panoramadach für ein Fahrzeug**
Openable panoramic roof for vehicle
Toit ouvrant panoramique pour véhicule

(30) Priorität: 07.07.2003 DE 10330786
(43) Veröffentlichungstag der Anmeldung: 12.01.2005
(73) Patentinhaber: Webasto AG, 82131 Stockdorf (DE)
(72) Erfinder: Schönauer, Miriam, 85405 Nandelstadt (DE); Birkner, Joachim, 82178 Puchheim (DE); Kölbl, Michael, 82061 Neuried (DE); Muttenhammer, Rudolf, 82110 Germering (DE); Pollak, Martin, 82178 Puchheim (DE); Schwaighofer, Ralf, 83115 Neubeuern (DE); Cocaign, Jean-Guy, Rochester, MI 48307 (US); Wulf, Friedhelm, 81243 München (DE); Lang, Alexander, 81541 München (DE)

(56) Entgegenhaltungen:
- EP-A- 1 136 239
- EP-A- 1 207 068
- EP-A- 1 270 299
- DE-A- 4 227 400
- DE-C- 19 525 839
- FR-A- 1 530 465
- GB-A- 291 829
- GB-A- 349 172
- US-A- 4 498 701

## Beschreibung

Die Erfindung betrifft ein öffnungsfähiges Fahrzeugdach gemäß dem Oberbegriff des Patentanspruchs 1.

Aus der gattungsgemäßen DE 195 25 839 C1 ist ein derartiges Fahrzeugdach mit zwei unmittelbar hintereinander angeordneten transparenten Deckeln bekannt, von denen der hintere Deckel mit seiner Vorderkante abgesenkt und der vordere Deckel mit seiner Hinterkante angehoben und über den hinteren Deckel nach hinten verschoben werden kann. Eine Durchsicht durch die Deckel ist in geschlossenem Zustand nur nach oben möglich.

Aus der FR 1 530 465 A ist ein Fahrzeugdach mit mehreren in Dachquerrichtung gewölbten, einander übergreifenden und gegeneinander verschiebbaren Dachteilen bekannt, die aus einem transparenten Kunststoff hergestellt sein können. Nach unten abgewinkelte Seitenwände der Dachteile übergreifen von außen die Seitenwände des Fahrzeugs.

Aus der GB 349 172 A ist ebenfalls ein Fahrzeugdach mit mehreren in Dachquerrichtung gewölbten, einander übergreifenden und teleskopisch gegeneinander verschiebbaren Dachteilen bekannt. Eine Durchsichtsmöglichkeit bei geschlossenem Dach ist nicht vorgesehen.

Aus der US 4 498 701 ist ein Fahrzeugdach bekannt, bei dem zwei flache Deckel eine Dachöffnung verschließen, von denen der vordere nach anheben des hinteren unter diesen verschoben werden kann. Unter dem hinteren Deckel ist ein festes nicht transparentes Himmelteil angeordnet.

Aus der DE 100 39 758 A1 ist ein Fahrzeugdach mit einer um ein seitliches Scharnier schwenkbaren gewölbten Dachhaube bekannt Die geöffnete Haube ermöglicht das ein- und aussteigen der Passagiere. Ein Öffnen der Haube während der Fahrt ist nicht möglich.

Aus der DE 100 39 853 C1 ist ein Festelement- Cabriolet mit einem Dachteil, einem Heckteil und schwenkbaren Seitenteilen bekannt. Das Verdeck lässt sich nur insgesamt öffnen oder schließen. Eine Teilöffnung während der Fahrt ist nicht vorgesehen.

Aus der DE 102 04 663 A1 ist ein Fahrzeugdach bekannt, das aus einer etwa in der Mitte quer geteilten gewölbten Kuppel besteht. Die Kuppelteile lassen sich in Längsrichtung auseinander schieben und geben dadurch einen Zwischenraum frei.

In jüngerer Zeit ist ein zunehmender Trend zu öffnungsfähigen Fahrzeugdächem mit immer größere Krümmung der Dachoberfläche sowohl in Fahrzeuglängsrichtung als auch in Fahrzeugquerrichtung zu beobachten. Solche Dächer werden auch als Panoramadächer bezeichnet.

Aus der EP 1 180 471 A2 ist beispielsweise ein modulartiges Fahrzeugdach bekannt geworden, das aus einer durchsichtigen Dachhaut als Außenschale einer Sandwich-Konstruktion und aus einer Innenschale der Sandwich-Konstruktion besteht. Die Innenschale ist rahmenartig geformt und unter Bildung einer als Panorama-Durchsichtsfläche bezeichneten zentralen Öffnung nur im Randbereich der Außenschale vorgesehen. Zum einen ist jedoch eine Durchsicht zur Seite hin - also ein echter Panorama-Effekt - bei diesem Fahrzeugdach auf Grund der rahmenartigen Innenschale konstruktionsbedingt nicht möglich, und zum anderen kann dieses Fahrzeugdach nicht geöffnet werden.

Aufgabe der Erfindung ist es, ein öffnungsfähiges Fahrzeugdach zu schaffen, das einfach und kostengünstig herstellbar ist und das auch in geschlossenem Zustand eine möglichst große Panorama-Durchsichtsfläche ermöglicht.

Diese Aufgabe wird durch ein Fahrzeugdach gemäß Anspruch 1 gelöst Vorteilhafte Ausgestaltungen der Erfindung sind Gegenstand der Unteransprüche.

Da das erfindungsgemäße Fahrzeugdach aus zwei Deckeln aus Kunststoff hergestellt ist, kann es in Kuppelform sowohl in Fahrzeuglängsrichtung als auch in Fahrzeugquerrichtung stark nach außen gewölbt geformt werden; außerdem weist jeder Deckel in Fahrzeuglängsrichtung verlaufende Seitenwände auf, wobei mindestens einer der beiden Deckel geöffnet werden kann. Dadurch wird ein öffnungsfähiges Fahrzeugdach geschaffen, das eine sehr große Panorama-Durchsichtsfläche aufweist. Darüber hinaus ist ein derartiges aus Kunststoff hergestelltes Fahrzeugdach mit zwei Deckeln variabel an das Design verschiedenster Fahrzeuge anpassbar. Durch die kuppelförmige Ausgestaltung des Fahrzeugdaches ergibt sich ferner eine erhöhte Kopffreiheit im Fahrzeuginnenraum.

Es ergibt sich eine angenehme Lüftungsmöglichkeit durch Schaffung eines Lüftungsspalts, wenn der hintere Deckel translatorisch in eine Offenstellung abgesenkt oder zumindest dessen vorderer Rand nach unten verschwenkt werden kann.

Es ist vorteilhaft, die Durchsichtsfläche nach oben hin teilweise freilegen zu können, indem der vordere Deckel über den in seiner Offenstellung befindlichen hinteren Deckel nach hinten verschoben wird. Die beiden Deckel können beispielsweise Teile eines außengeführten Schiebedaches oder eines Spoilerdaches sein.

Die seitliche Führung des vorderen Deckels auf seinem Verschiebeweg nach hinten kann mittels einer seitlichen Führungsanordnung verbessert werden. Eine Realisierungsmöglichkeit für diese seitliche Führungsanordnung, die optisch besonders ansprechend ist, ergibt sich, indem die Führungsanordnung in eine auf dem Fahrzeugdach vorhandene Dachreling integriert wird. Durch eine derart einfache Verschiebemechanik ergibt sich eine vergrößerte Durchsichtsfläche.

Wenn der hintere Deckel an seinem vorderen Rand einen abgesenkten Flansch aufweist, kann der hintere Rand des vorderen Deckels bündig von dem Flansch aufgenommen und von ihm abgestützt werden. Dies verbessert die Stabilität der Zwei-Deckel-Anordnung. Wenn in die Oberseite des Flansches außerdem eine Dichtung integriert ist, kann die Verbindungsstelle zum vorderen Deckel optimal abgedichtet werden.

Die Panoramasicht bzw. Rundumsicht kann noch weiter verbessert werden, wenn auch der hintere Deckel transparent ist.

Um zu verhindern, dass eine Deckelbewegungsmechanik, Führungselemente oder Dichtungen, die sich im Bereich des Umfangsrandes des vorderen Deckels und/oder des hinteren Deckels befinden, von außen bzw. von oben sichtbar sind, ist es günstig, eine Abdeckung durch nicht transparente Streifen auf dem jeweiligen Umfangsrand vorzusehen.

Das erfindungsgemäße Fahrzeugdach kann besonders einfach, kostengünstig und in der gewünschten Form mit starker kuppelartiger Wölbung der mit Seitenwänden versehenen zwei Deckel hergestellt werden, wenn als Material ein Polycarbonat verwendet wird.

Nachfolgend wird ein Ausführungsbeispiel des erfindungsgemäßen Fahrzeugdaches unter Bezugnahme auf die Zeichnung näher erläutert. Es zeigt:
- Fig. 1: eine schematische perspektivische Ansicht einer Ausführungsform eines Fahrzeugdaches von links vorne,
- Fig. 2: eine schematische Ansicht eines Längsschnittes durch die Ausführungsform in geschlossener Stellung,
- Fig. 3: eine schematische Ansicht eines Längsschnittes durch die Ausführungsform in Lüftungsstellung,
- Fig. 4: eine schematische Ansicht eines Längsschnittes durch die Ausführungsform in vollständig geöffneter Stellung,
- Fig. 5: eine schematische perspektivische Ansicht einer Führungsanordnung für den vorderen Deckel von links vorne, und
- Fig. 6: einen Querschnitt längs der Linie A-A in Fig. 5.

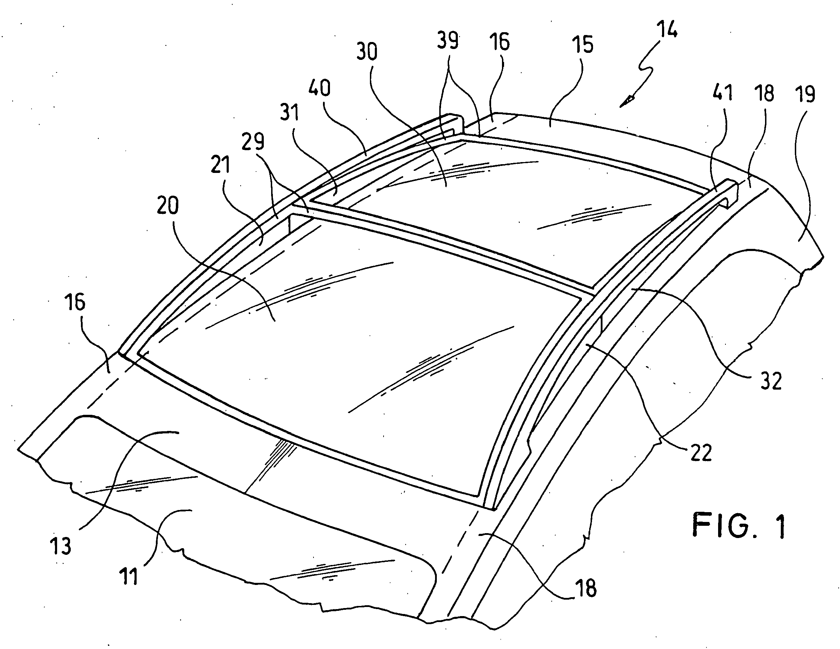

Fig. 1 zeigt ein erfindungsgemäßes Fahrzeugdach, das in seiner Gesamtheit mit der Bezugszahl 14 bezeichnet ist. Das Fahrzeugdach 14 schließt sich an seinem vorderen Ende 13 (häufig als Wind lauf bezeichnet) an eine Windschutzscheibe 11 an und endet je nach Fahrzeugtyp mit seinem hinteren Ende 15 an den C-Säulen oder D-Säulen 19. Auf der rechten Fahrzeugseite wird das Fahrzeugdach 14 von einem rechten Dachlängsholm 16 getragen, und auf der linken Fahrzeugseite wird das Fahrzeugdach 14 von einem linken Dachlängsholm 18 getragen.

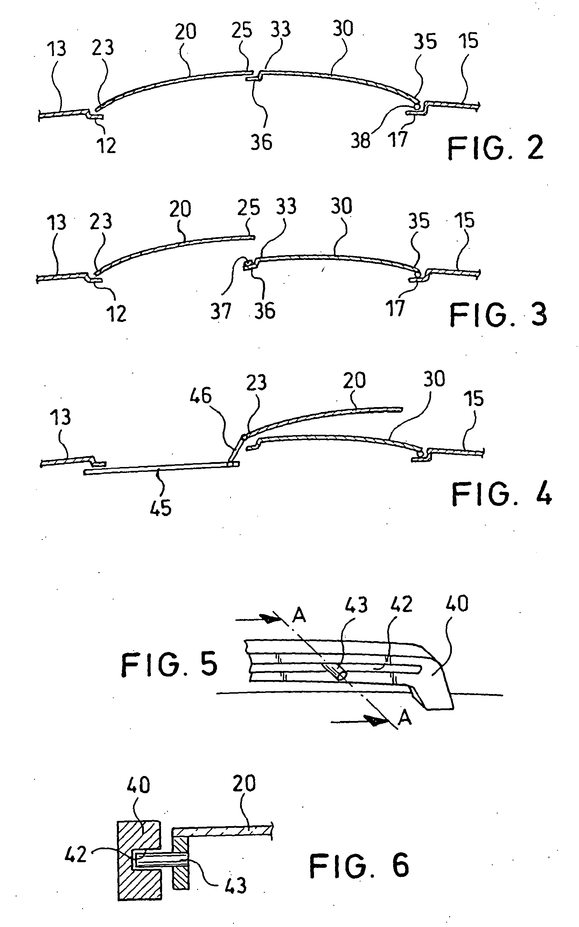

Ein vorderer Deckel 20 und ein hinterer Deckel 30 bilden den mittleren Bereich des Fahrzeugdaches 14. Die beiden Deckel 20, 30 sind aus Kunststoff, vorzugsweise aus einem Polycarbonat, hergestellt und sind in Fahrzeuglängsrichtung stark nach außen gewölbt, so dass sie zusammen eine Kuppel bilden, was auch in Fig. 2 gut zu sehen ist. Der vordere Deckel 20 weist eine rechte Seitenwand 21 und eine linke Seitenwand 22 auf, die sich in Fahrzeuglängsrichtung in etwa vertikal von der Deckelfläche in Richtung zum Dachlängsholm 16 bzw. 18 nach unten erstrecken. In ähnlicher Weise weist der hintere Deckel 30 eine rechte Seitenwand 31 und eine linke Seitenwand 32 auf, die mit der linken Seitenwand 21 bzw. der rechten Seitenwand 22 des vorderen Deckels 20 in Fahrzeuglängsrichtung fluchten. Die Seitenwände 21 und 22 sowie 31 und 32 vergrößern den seitlichen Durchsichtsbereich. Die Seitenwände 21, 22, 31, 32 sind vorzugsweise aus dem gleichen Kunststoff wie die beiden Deckel 20 und 30 hergestellt und daher ebenfalls transparent. Üblicherweise können die Deckel 20 und 30 zusammen mit ihren Seitenwänden 21 und 22 bzw. 31 und 32 einstückig geformt werden.

Die aus den beiden Deckeln 20 und 30 sowie den Seitenwänden 21 und 22 bzw. 31 und 32 gebildete Kuppel ist Teil eines Panoramadaches, das nicht nur eine freie Durchsicht aus dem Fahrzeuginneren nach oben, vorne und hinten, sondern auch zu den Seiten hin nach links und rechts ermöglicht. Die Oberseite des vorderen Deckels 20 ist bündig mit der Oberseite einer Dachreling 40, 41, während die Oberseite des hinteren Deckels 30 im hinteren Bereich deutlich unter die Oberseite der Dachreling 40, 41 abfällt. Diese Gestaltung ist optisch sehr ansprechend.

Der Deckel 20 weist an seinem Umfangsrand 29 einen umlaufenden Streifen auf, der nicht transparent ist. Dieser umlaufende Streifen kann beispielsweise durch Bedrucken oder Aufbringen einer Folie hergestellt werden und ist zweckmäßigerweise gerade so groß, dass er darunterliegende Elemente zur Bewegung und/oder Führung des Deckels oder zu dessen Abdichtung nach oben hin abdeckt. Der Deckel 30 weist an seinem Umfangsrand 39 einen entsprechenden umlaufenden Streifen auf. Falls mehr Wert auf eine möglichst große Sichtfläche nach außen gelegt wird als auf die Abdeckung, können die Streifen auf den Umfangsrändern 29 und 39 auch weggelassen werden.

In den Fig. 2 bis 4 sind unterschiedliche Stellungen des erfindungsgemäßen Fahrzeugdaches dargestellt. Fig. 2 zeigt das erfindungsgemäße Fahrzeugdach in geschlossener Stellung, in der die beiden Deckel 20 und 30 eine stark nach oben gewölbte kuppelförmige Dachfläche bilden. Dabei liegt der vordere Deckel 20 mit seinem vorderen Rand 23 in an sich bekannter Weise auf einem nach unten abgekröpften Flansch 12 an der Hinterseite des vorderen Endes 13 des Fahrzeugdaches 14 bzw. des Windlaufs auf. Der hintere Deckel 30 liegt in an sich bekannter Weise auf einem nach unten abgekröpften Flansch 17 an der Vorderseite des hinteren Endes 15 des Fahrzeugdaches 14 auf, an dem sein hinterer Rand 35 mittels eines Scharniers 38 angelenkt ist. Der hintere Deckel 30 weist an seinem vorderen Rand 33 einen nach unten abgekröpften Flansch 36 auf, auf dem der hintere Rand 25 des vorderen Deckels 20 unter Zwischenlage einer Dichtung 37 (Fig. 3) aufliegt. Die Anordnung der einzelnen Elemente erfolgt dabei so, dass eine bündige Dachfläche gebildet wird.

Fig. 3 zeigt das erfindungsgemäße Fahrzeugdach in einer der möglichen Offenstellungen. Der vordere Rand 33 des hinteren Deckels 30 ist dabei durch Verschwenken um das an seinem hinteren Rand 35 befindliche Scharnier 38 nach unten abgesenkt. In dieser Offenstellung besteht ein Lüftungsspalt zwischen dem hinteren Rand 25 des vorderen Deckels 20 und dem vorderen Rand 33 des hinteren Deckels 30. Statt der Verschwenkung des hinteren Deckels 30 um das Scharnier 38 kann auch eine translatorische Absenkung des gesamten hinteren Deckels 30 mittels eines Absenkmechanismus (nicht gezeigt) vorgesehen sein.

Das Absenken bzw. das Schwenken des hinteren Deckels 30 nach unten erfolgt in jedem Fall nur so weit, dass der Wasserablauf über die für den Wasserablauf der Dachhaut vorgesehenen Rinnen bzw. Kanäle gewährleistet ist.

Durch Verschieben des vorderen Deckels 20 nach hinten über den translatorisch abgesenkten oder an seinem vorderen Rand 33 nach unten verschwenkten hinteren Deckel 30 kann eine Dachöffnung freigegeben werden, wie es in Fig. 4 dargestellt ist. Der vordere Rand 23 des Deckels 20 ist an jeder Seite über einen nur schematisch dargestellten Kopplungshebel 46 an einer Lagerschiene 45 geführt, die vorzugsweise in den Dachlängsholmen 16 bzw. 18 vorgesehen ist. Die Verschiebung des vorderen Deckels 20 erfolgt in etwa so, wie es von außengeführten Schiebedächern oder Spoilerdächern bekannt ist.

Auch der hintere Rand 25 des vorderen Deckels 20 wird auf seinem Verschiebeweg nach hinten mittels einer Führungsanordnung seitlich am Fahrzeugdach 14 geführt. Eine optisch besonders ansprechende und zweckmäßige Ausführung dieser Führungsanordnung ist in den Fig. 5 und 6 dargestellt. In jeder Dachreling (wovon nur die rechte Dachreling 40 dargestellt ist) ist auf der zur Fahrzeugmitte zugewandten Seite eine Führungsnut 42 integriert, in die ein Führungszapfen 43 eingreift, der mit dem vorderen Deckel 20 im Bereich von dessen hinterem Rand 25 fest verbunden ist und seitlich in Fahrzeugquerrichtung absteht. Durch das Absenken bzw. Schwenken des hinteren Deckels 30 nach unten werden die Führungsnuten 42 freigegeben, so daß die Führungszapfen 43 in ihnen nach hinten gleiten können. Statt der Führungsnuten 42 können auch entsprechende Führungsschienen oder Lagerschienen vorgesehen sein.

Falls keine Dachreling 40, 41 vorhanden ist, sind die Führungsnuten 42 vorzugsweise in die Dachlängsholme 16 und 18 integriert.

Die Anlenkung des hinteren Deckels 30 am Fahrzeugdach 14 kann statt mittels des Scharniers 38 beispielsweise auch mittels Schwenkzapfen erfolgen, die in entsprechende Ausnehmungen in den Dachlängsholmen 16 und 18 eingreifen.

Da die beiden Deckel 20 und 30 mit ihren Seitenwänden 21, 22 bzw. 31, 32 aus einem Kunststoff, insbesondere einem Polycarbonat, hergestellt sind, ist es problemlos möglich, ihnen die gewünschte stark gewölbte Form zu geben, um den Panorama-Effekt so stark wie möglich zu betonen. Diese Formgebung ist - jedenfalls mit der derzeitigen Fertigungstechnologie - mit Glas nicht erzielbar.

### Bezugszeichenliste

- 11: Frontscheibe
- 12: Flansch (von 13)
- 13: vorderes Ende (von 14)
- 14: Fahrzeugdach
- 15: hinteres Ende (von 14)
- 16: Dachlängsholm
- 17: Flansch (von 15)
- 18: Dachlängsholm
- 19: D-Säulen
- 20: vorderer Deckel
- 21,22: Seitenwände (von 20)
- 23: vorderer Rand (von 20)
- 25: hinterer Rand (von 20)
- 29: Umfangsrand (von 20)
- 30: hinterer Deckel
- 31,32: Seitenwände (von 30)
- 33: vorderer Rand (von 30)
- 35: hinterer Rand (von 30)
- 36: Flansch
- 37: Dichtung
- 38: Scharnier
- 39: Umfangsrand (von 30)
- 40,41: Dachreling
- 42: Führungsschiene
- 43: Führungszapfen
- 45: Lagerschiene
- 46: Kopplungshebel

## Patentansprüche

1. Fahrzeugdach mit einem transparenten vorderen Deckel (20) und einem hinteren Deckel (30), wobei zumindest der hintere Deckel (30) zum Öffnen des Fahrzeugdaches (14) in eine Offenstellung absenkbar ist, **dadurch gekennzeichnet, dass** die Deckel (20 bzw. 30) aus Kunststoff in Kuppelform in Fahrzeuglängsrichtung nach außen gewölbt geformt sind und in Fahrzeuglängsrichtung verlaufende, nach unten abgewinkelte und eine Durchsicht zu den Seiten ermöglichende Seitenwände (21, 22 bzw. 31, 32) aufweisen sowie zwischen Dachlängsholmen (16, 18) oberhalb dieser angeordnet sind.

2. Fahrzeugdach nach Anspruch 1,
**dadurch gekennzeichnet, dass** der hintere Deckel (30) im Bereich seines hinteren Rands (35) am Fahrzeugdach (14) oder an den Dachlängsholmen (16, 18) angelenkt und mit seinem vorderen Rand (33) nach unten in eine Offenstellung schwenkbar ist.

3. Fahrzeugdach nach Anspruch 1 oder 2,
**dadurch gekennzeichnet, dass** der vordere Deckel (20) über den in seiner Offenstellung befindlichen hinteren Deckel (30) nach hinten verschiebbar ist

4. Fahrzeugdach nach einem der vorhergehenden Ansprüche,
**dadurch gekennzeichnet, dass** der vordere Deckel (20) in einer seitlichen Führungsanordnung (42; 45, 46) am Fahrzeugdach (14) geführt ist.

5. Fahrzeugdach nach Anspruch 4,
**dadurch gekennzeichnet, dass** eine Dachreling (40, 41) vorgesehen ist, in die die Führungsanordnung (42) integriert ist.

6. Fahrzeugdach nach einem der vorhergehenden Ansprüche,
**dadurch gekennzeichnet, dass** der hintere Deckel (30) an seinem vorderen Rand (33) einen abgesenkten Flansch (36) für die bündige Aufnahme des hinteren Randes (25) des vorderen Deckels (20) aufweist.

7. Fahrzeugdach nach Anspruch 6,
**dadurch gekennzeichnet, dass** der Flansch (36) eine Dichtung (37) für den vorderen Deckel (20) aufweist.

8. Fahrzeugdach nach einem der vorhergehenden Ansprüche,
**dadurch gekennzeichnet, dass** der vordere Deckel (20) und der hintere Deckel (30) Teile eines außengeführten Schiebedaches oder eines Spoilerdaches bilden.

9. Fahrzeugdach nach einem der vorhergehenden Ansprüche,
**dadurch gekennzeichnet, dass** der hintere Deckel (30) transparent ist.

10. Fahrzeugdach nach einem der vorhergehenden Ansprüche.
**dadurch gekennzeichnet, dass** ein Bereich am Umfangsrand (29, 39) des vorderen Deckels (20) und/oder des hinteren Deckels (30) nicht transparent ist

11. Fahrzeugdach nach einem der vorhergehenden Ansprüche,
**dadurch gekennzeichnet, dass** der vordere Deckel (20) und/oder der hintere Deckel (30) aus einem Polycarbonat gebildet sind.

## Claims

1. Vehicle roof with a transparent front cover (20) and a rear cover (30), wherein at least the rear cover (30) can be lowered into an open position to open the vehicle roof (14), **characterized in that** the plastic covers (20 and 30) are shaped such that they are curved outwards in a dome shape in the longitudinal direction of the vehicle and have side walls (21, 22 and 31, 32, respectively), which run in the longitudinal direction of the vehicle, are angled downwards and make it possible to look through them to the sides, and are arranged between and above roof longitudinal struts (16, 18).

2. Vehicle roof according to Claim 1, **characterized in that** the rear cover (30) is coupled in the region of its rear edge (35) to the vehicle roof (14) or to the roof longitudinal struts (16, 18) and can be pivoted at its front edge (33) downwards into an open position.

3. Vehicle roof according to Claim 1 or 2, **characterized in that** the front cover (20) can be displaced to the rear over the rear cover (30) in its open position.

4. Vehicle roof according to one of the preceding claims, **characterized in that** the front cover (20) is guided in a lateral guide arrangement (42; 45, 46) on the vehicle roof (14).

5. Vehicle roof according to Claim 4, **characterized in that** a roof rail (40, 41), in which the guide arrangement (42) is integrated, is provided.

6. Vehicle roof according to one of the preceding claims, **characterized in that** the rear cover (30) has, at its front edge (33), a lowered flange (36) for the flush reception of the rear edge (25) of the front cover (20).

7. Vehicle roof according to Claim 6, **characterized in that** the flange (36) has a seal (37) for the front cover (20).

8. Vehicle roof according to one of the preceding claims, **characterized in that** the front cover (20) and the rear cover (30) form parts of a sliding roof which is guided on the outside or of a spoiler roof.

9. Vehicle roof according to one of the preceding claims, **characterized in that** the rear cover (30) is transparent.

10. Vehicle roof according to one of the preceding claims, **characterized in that** a region on the circumferential edge (29, 39) of the front cover (20) and/or of the rear cover (30) is not transparent.

11. Vehicle roof according to one of the preceding claims, **characterized in that** the front cover (20) and/or the rear cover (30) is/are formed from a polycarbonate.

## Revendications

1. Toit de véhicule comprenant un couvercle avant transparent (20) et un couvercle arrière (30), au moins le couvercle arrière (30) pouvant être abaissé dans une position d'ouverture pour ouvrir le toit du véhicule (14), **caractérisé en ce que** les couvercles (20, respectivement 30) sont moulés en plastique en forme de coupelle avec une courbure vers l'extérieur dans la direction longitudinale du véhicule, présentent des parois latérales (21, 22, respectivement 31, 32) s'étendant dans la direction longitudinale du véhicule, coudées vers le bas et permettant de voir à travers les côtés, et sont disposés entre des longerons de toit (16, 18) au-dessus de ceux-ci.

2. Toit de véhicule selon la revendication 1,
**caractérisé en ce que** le couvercle arrière (30) est articulé dans la région de son bord arrière (35) au toit du véhicule (14) ou aux longerons de toit (16, 18) et peut pivoter avec son bord avant (33) vers le bas dans une position d'ouverture.

3. Toit de véhicule selon la revendication 1 ou 2,
**caractérisé en ce que** le couvercle avant (20) peut être coulissé vers l'arrière au-dessus du couvercle arrière (30) se trouvant dans sa position d'ouverture.

4. Toit de véhicule selon l'une quelconque des revendications précédentes, **caractérisé en ce que** le couvercle avant (20) est guidé dans un agencement de guidage latéral (42 ; 45, 46) sur le toit du véhicule (14).

5. Toit de véhicule selon la revendication 4,
**caractérisé en ce que** l'on prévoit une galerie de toit (40, 41) dans laquelle est intégré l'agencement de guidage (42).

6. Toit de véhicule selon l'une quelconque des revendications précédentes,
**caractérisé en ce que** le couvercle arrière (30) présente à son bord avant (33) une bride abaissée (36) pour recevoir en affleurement le bord arrière (25) du couvercle avant (20).

7. Toit de véhicule selon la revendication 6,
**caractérisé en ce que** la bride (36) présente un joint d'étanchéité (37) pour le couvercle avant (20).

8. Toit de véhicule selon l'une quelconque des revendications précédentes,
**caractérisé en ce que** le couvercle avant (20) et le couvercle arrière (30) font partie d'un toit ouvrant guidé à l'extérieur ou d'un toit de spoiler.

9. Toit de véhicule selon l'une quelconque des revendications précédentes,
**caractérisé en ce que** le couvercle arrière (30) est transparent.

10. Toit de véhicule selon l'une quelconque des revendications précédentes,
**caractérisé en ce qu'**une région au niveau du bord périphérique (29, 39) du couvercle avant (20) et/ou du couvercle arrière (30) n'est pas transparente.

11. Toit de véhicule selon l'une quelconque des revendications précédentes,
**caractérisé en ce que** le couvercle avant (20) et/ou le couvercle arrière (30) sont formés en polycarbonate.
